# EUROPÄISCHE PATENTANMELDUNG

(11) **EP 4 822 748 A1**
(43) Veröffentlichungstag der Anmeldung: **14.10.2026**
(21) Anmeldenummer: 25170073.8
(22) Anmeldetag: 11.04.2025
(51) Int. Cl.: H01M 4/04, H01M 10/058, H01M 10/44, H01M 10/48, H01M 10/0525

(54) **VERFAHREN UND VORRICHTUNG ZUR STEUERUNG EINER FORMIERUNG EINER BATTERIEZELLE**

(71) Anmelder: Siemens Aktiengesellschaft, 80333 München (DE)
(72) Erfinder: Baldauf, Manfred, 91056 Erlangen (DE); Fischer, Michael, 91320 Ebermannstadt (DE); Radinger, Hannes, 86152 Augsburg (DE); Schulte, Sascha, 91315 Höchstadt (DE)
(74) Vertreter: Siemens Patent Attorneys

(57) **Zusammenfassung**

Die Erfindung betrifft ein Verfahren zur Steuerung der Formierung (100) wenigstens einer Batteriezelle zur Ausbildung einer Feststoff-Elektrolyt-Grenzphase (SEI). Das Verfahren ist gekennzeichnet durch die folgenden Schritte:
- Erfassen (101) einer mit der Feststoff-Elektrolyt-Grenzphase assoziierten Ladungsbilanz während wenigstens eines Formierungszyklus der Formierung;
- Ermitteln (102) eines mit der Feststoff-Elektrolyt-Grenzphase assoziierten Widerstands während des Formierungszyklus; und
- Steuerung (103) der Formierung (100) in Abhängigkeit von der erfassten Ladungsbilanz und dem ermittelten Widerstand.

Weiterhin betrifft die Erfindung eine Vorrichtung zur Steuerung der Formierung wenigstens einer Batteriezelle zur Ausbildung einer Feststoff-Elektrolyt-Grenzphase (SEI).

## Beschreibung

Die vorliegende Erfindung bezieht sich auf eine Formierung beziehungsweise ein Formierungsverfahren für eine Batteriezelle und insbesondere auf die Steuerung der Ausbildung einer Feststoff-Elektrolyt-Grenzphase (englisch: Solid Electrolyte Interphase, SEI) in Batteriezellen, einschließlich eines Verfahrens zur Steuerung der Formierung gemäß Anspruch 1 und einer Vorrichtung zur Steuerung der Formierung gemäß Anspruch 14.

Für eine Batterieherstellung ist eine Formierung der Batteriezellen beziehungsweise der Batterien entscheidend für die Leistung und Lebensdauer der hergestellten Batterien. Eine Formierung wird insbesondere für Lithium-Ionen-Batterien und verwandte Chemien durchgeführt. Die Formierung beziehungsweise der Formierungsprozess, der typischerweise unmittelbar nach einem Befüllen der Batteriezelle mit Elektrolyt erfolgt, umfasst erste Lade- und Entladezyklen, die zu einer Ausbilddung einer gewünschten Feststoff-Elektrolyt-Grenzphase (SEl-Schicht) auf der Oberfläche der negativen Elektrode der Batterie führen.

Die SEI-Schicht ist eine wichtige Komponente der Batterie. Sie dient als elektrisch isolierende, jedoch ionisch leitfähige Barriere zwischen der Elektrode und dem Elektrolyten. Ihre Ausbildung ist besonders für Lithium-Ionen-Batterien und Natrium-Ionen-Batterien wichtig, bei denen eine verbesserte SEI zu einer verbesserten und gegebenenfalls zu einer optimalen Batterieleistung führt. Die SEl-Schicht bildet sich durch elektrochemische Reaktionen zwischen den Elektrolytkomponenten und der Elektrodenoberfläche, die während des Formierungsprozesses innerhalb ermittelter Spannungs- und Temperaturbereiche ablaufen.

Die Formierung beziehungsweise Batterieformierung ist einer der zeitaufwändigsten und energieintensivsten Prozesse in der Batterieproduktion. Sie umfasst typischerweise mehrere Lade- und Entladezyklen, wobei typischerweise jeder Hersteller sein eigenes Formierungsprotokoll verwendet. Die genannten Protokolle umfassen spezifische Zyklusregime und Ruheperioden, die sorgfältig entwickelt wurden, um die Ausbildung der SEl-Schicht zu optimieren.

Der Formierungsprozess ist technisch sowie chemisch komplex und umfasst typischerweise mehrere gleichzeitig ablaufende Reaktionen innerhalb der Batterie. Typischerweise wird nicht die gesamte, während der Formierung übertragene Ladung für die Ausbildung der SEI-Schicht verwendet. Das ist deshalb der Fall, da gleichzeitig reguläre Lade- und Entladeprozesse erfolgen, bei denen Lithium-Ionen in die Elektroden ein- und ausgelagert werden. Diese Komplexität erfordert sorgfältig eingestellte Strom-, Spannungs- und Temperaturprofile, damit die genannten parallelen Prozesse berücksichtigt werden.

Bekannte Formierungsverfahren beziehungsweise Formierungsprotokolle berücksichtigen typischerweise nicht die zellspezifischen Eigenschaften jeder elektrochemischen Batteriezelle. Diese Eigenschaften können aufgrund von Schwankungen im Produktionsprozess variieren und möglicherweise die Qualität der gebildeten SEI-Schicht beeinflussen. Somit besteht ein wachsender Bedarf an adaptiveren und effizienteren Formierungsprozessen, die Zelle-zu-Zelle-Variationen berücksichtigen und die Formierung für jede einzelne Batterie optimieren können.

Der vorliegenden Erfindung liegt die Aufgabe zugrunde, verbessertes Verfahren zur Steuerung der Formierung einer Batteriezelle bereitzustellen, welches insbesondere adaptiv ist und somit individuelle Zelleigenschaften berücksichtigen kann.

Die Aufgabe wird durch ein Verfahren mit den Merkmalen des unabhängigen Patentanspruches 1 sowie durch ein Verfahren mit den Merkmalen des unabhängigen Patentanspruches 14 gelöst. In den abhängigen Patentansprüchen sind vorteilhafte Ausgestaltungen und Weiterbildungen der Erfindung angegeben.

Das erfindungsgemäße Verfahren zur Steuerung einer Formierung wenigstens einer Batteriezelle zur Ausbildung einer Feststoff-Elektrolyt-Grenzphase (SEI) ist wenigstens gekennzeichnet durch folgende Schritte:
- Erfassen einer mit der Feststoff-Elektrolyt-Grenzphase assoziierten Ladungsbilanz während wenigstens eines Formierungszyklus der Formierung;
- Ermitteln eines mit der Feststoff-Elektrolyt-Grenzphase assoziierten Widerstands während des Formierungszyklus; und
- Steuerung der Formierung in Abhängigkeit von der erfassten Ladungsbilanz und dem ermittelten Widerstand.

Vorliegend kann unter dem Begriff der Steuerung ebenfalls eine Regelung verstanden werden.

Eine Batteriezelle kann eine einzelne elektrochemische Einheit innerhalb einer Batterie sein, die typischerweise eine positive Elektrode (Kathode), eine negative Elektrode (Anode) und einen Elektrolyt umfasst. Batteriezellen sind insbesondere wiederaufladbare Zellen, beispielsweise Lithium-Ionen-Zellen und/oder Natrium-Ionen-Zellen, die einen Formierungsprozess zur Ausbildung einer Feststoff-Elektrolyt-Grenzphase bei ihrer Herstellung durchlaufen.

Eine Feststoff-Elektrolyt-Grenzphase (SEI oder SEI-Schicht) ist typischerweise eine Schicht, die sich während der ersten Ladezyklen und Entladezyklen auf einer Oberfläche der negativen Elektrode (Anode) einer Batteriezelle ausbildet. Diese Schicht beeinflusst die Leistung und Langlebigkeit der Batterie, da sie eine Schutzbarriere zwischen der Elektrode und dem Elektrolyt ausbildet und den Durchgang von Ionen ermöglicht, während sie eine weitere Zersetzung des Elektrolyten verhindert.

Eine Formierung bezieht sich auf ein Verfahren beziehungsweise einen Prozess der gesteuerten oder geregelten initialen Lade- und/oder Entladezyklen, die eine neu hergestellte Batteriezelle durchläuft. Die Formierung ist entscheidend für die Entwicklung der SEI-Schicht und somit für die Festlegung der Leistungsmerkmale der Batterie. Der Formierungsprozess umfasst typischerweise mehrere Formierungszyklen mit spezifischen Strom-, Spannungs- und/oder Temperaturprofilen.

Eine Ladungsbilanz ist insbesondere eine Nettomenge der elektrischen Ladung, die während eines Formierungszyklus einer Batteriezelle übertragen wird. Die Ladungsbilanz entspricht somit der Differenz zwischen den elektrischen Ladungen, die beim Ladevorgang eines Zyklus in die Batterie übertragen und beim Entladevorgang desselben Zyklus aus ihr entnommen werden. Die Ladungsbilanz ist somit mit der Ausbildung der SEI-Schicht assoziiert. Die Ladungsbilanz kann mittels einer Coulomb-Zählung (englisch: Coulomb Counting) erfasst beziehungsweise gemessen werden.

Ein Widerstand ist der elektrische Widerstand, der mit der SEI-Schicht verbunden ist (SEI-Widerstand). Dieser Widerstand kann mittels mehrerer Messtechniken ermittelt werden, insbesondere mittels Strompulsmethoden und/oder mittels einer elektrochemischen Impedanzspektroskopie (EIS). Hierbei ist der Widerstand der SEI-Schicht ein vorteilhafter Indikator für die Qualität und Dicke der SEI-Schicht. Typischerweise ist der Widerstand reellwertig. Wird in einem Zwischenschritt, wie beispielsweise bei einer EIS-Messung, zunächst ein komplexwertiger Widerstand (Impedanz) erfasst, so wird der Widerstand durch den Realteil der Impedanz ausgebildet.

Das Verfahren zur Steuerung einer Formierung einer Batteriezelle gemäß der Erfindung weist einen oder mehrere der folgenden Vorteile auf:
Zellenspezifische Formierung: Die Erfindung ermöglicht eine zellspezifische Steuerung und Überwachung des Formierungsprozesses. Durch die Erfassung der Ladungsbilanz und die Ermittlung des mit der Feststoff-Elektrolyt-Grenzphase (SEI) verbundenen (reellwertigen) Widerstands für jede einzelne Zelle kann das Verfahren den Formierungsprozess gezielt steuern beziehungsweise regeln, um Zelle-zu-Zelle-Variationen zu berücksichtigen. Dies ist eine vorteilhafte Verbesserung gegenüber bekannten Verfahren, die typischerweise ein einheitliches Formierungsprotokoll für alle Zellen verwenden, unabhängig von den individuellen Zelleigenschaften.

Echtzeit-Prozessbewertung: Die synergetische Kombination aus dem Erfassen der Ladungsbilanz und dem Ermitteln des Widerstands stellt eine Echtzeit-Bewertung des SEI-Ausbildungsprozesses bereit. Dadurch kann die Formierung zeitnah verbessert gesteuert beziehungsweise geregelt werden, sodass eine möglichst optimale SEI-Ausbildung jeder einzelnen Batteriezelle ermöglicht wird. Bekannte Verfahren stützten sich typischerweise auf eine Qualitätskontrolle nach der Formierung, sodass Probleme erst nach Abschluss des Formierungsprozesses erkannt werden können.

Verbesserte Qualitätskontrolle: Durch die Überwachung der Ladungsbilanz und des SEI-Widerstands bietet das Verfahren bereits eine zuverlässige Qualitätskontrolle während des Formierungsprozesses.

Verbesserte Produktionseffizienz: Die Möglichkeit, den Formierungsprozess basierend auf Echtzeitmessungen zu steuern, kann die Produktionseffizienz verbessern. Zellen, die schneller eine hochwertige SEI-Schicht bilden, können identifiziert und früher aus dem Formierungsprozess entfernt werden, wodurch Formierungskanäle frei werden. Umgekehrt können Zellen, die zusätzliche Formierungszeit benötigen, die notwendigen Zyklen erhalten, ohne die Qualität zu beeinträchtigen. Dieser optimierte Prozess kann die Gesamtformierungszeit und den Energieverbrauch reduzieren und damit einen der zeitaufwändigsten und energieintensivsten Aspekte der Batterieproduktion verbessern.

Frühzeitige Erkennung defekter Zellen: Das Verfahren ermöglicht die frühzeitige Identifizierung von Zellen, die wahrscheinlich nicht den Qualitätsstandards entsprechen werden. Durch den Abgleich der erfassten Ladungsbilanz und des ermittelten Widerstands mit festgelegten Toleranzbereichen können potenziell defekte Zellen viel früher als bei herkömmlichen Prozessen identifiziert und aus der Produktionslinie entfernt werden. Diese frühzeitige Erkennung kann den Ausschuss erheblich reduzieren und die Gesamtproduktionsausbeute verbessern.

Anpassungsfähigkeit an verschiedene Zellchemien: Während das Verfahren besonders vorteilhaft für Lithium-Ionen-Batterien und Natrium-Ionen-Batterien ist, kann dieses für verschiedene Batteriechemien angewendet werden, die eine SEI-Ausbildung umfassen.

Kontinuierliche Verbesserung: Die während des Formierungsprozesses gesammelten Daten, insbesondere die ermittelten Ladungsbilanzen und zugehörigen Widerstände, können zur kontinuierlichen Verfeinerung und Verbesserung der Formierungsprotokolle verwendet werden. Durch die Analyse der Beziehungen zwischen Formierungsparametern, SEI-Eigenschaften und der endgültigen Batterieleistung kann die Formierung stetig verbessert und optimiert werden.

Reduzierter Energieverbrauch: Durch die Optimierung des Formierungsprozesses für jede Zelle kann das Verfahren den Gesamtenergieverbrauch der Batterieproduktion reduzieren. Dies senkt nicht nur die Produktionskosten, sondern trägt auch zur ökologischen Nachhaltigkeit der Batterieherstellung bei.

Verbesserte Batterieleistung: Die erfindungsgemäße Steuerung des SEI-Ausbildungsprozesses kann zu Verbesserungen der Leistungsmerkmale der Batterien führen, wie zu einer höheren Kapazität, einer geringen Selbstentladungsrate und/oder einem geringen Innenwiderstand. Dies kann zu qualitativ hochwertigeren Batterien führen und möglicherweise die Lebensdauer der Batterien im Einsatz verlängern.

Zusammenfassend stellt das erfindungsgemäße Verfahren ein effizienteres, robusteres, zellspezifisches und verbessertes Formierungsverfahren für Batterien bereit. Durch das Verfahren kann die Produktionseffizienz verbessert werden, Kosten gesenkt werden und die Batteriequalität erhöht werden.

Die erfindungsgemäße Vorrichtung zur Steuerung einer Formierung wenigstens einer Batteriezelle zur Ausbildung einer Feststoff-Elektrolyt-Grenzphase (SEI) ist dadurch gekennzeichnet, dass sie eine Messeinheit und eine Steuereinheit umfasst, wobei
- die Messeinheit dazu ausgebildet ist, eine mit der Feststoff-Elektrolyt-Grenzphase assoziierte Ladungsbilanz während wenigstens eines Formierungszyklus der Formierung zu erfassen;
- die Messeinheit dazu ausgebildet ist, einen mit der Feststoff-Elektrolyt-Grenzphase assoziierten Widerstand während des Formierungszyklus zu ermitteln; und
- die Steuereinheit dazu ausgebildet ist, die Formierung in Abhängigkeit von der erfassten Ladungsbilanz und dem ermittelten Widerstand zu steuern.

Es ergeben sich zum erfindungsgemäßen Verfahren gleichartige, gleichwertige und gleichwirkende Vorteile.

Gemäß einer bevorzugten Ausgestaltung der Erfindung basiert die Steuerung auf einem Abgleich der erfassten Ladungsbilanz und des ermittelten Widerstands mit jeweiligen festgelegten Toleranzbereichen.

Diese Ausführungsform bietet eine robuste Methode zur Bewertung der Qualität des SEI-Ausbildungsprozesses. Durch den Abgleich der erfassten Ladungsbilanz- und Widerstandswerte mit vordefinierten Toleranzbereichen können schnell Zellen identifiziert werden, die sich abnormal oder außerhalb der gewünschten Spezifikationen entwickeln. Dies ermöglicht eine Echtzeitanpassung des Formierungsprozesses oder eine frühzeitige Aussonderung potenziell fehlerhafter Zellen. Dadurch wird die Gesamtproduktionseffizienz und Qualitätskontrolle verbessert.

Die Toleranzbereiche können basierend auf historischen Daten und Qualitätskontrollen beziehungsweise Qualitätsprüfungen dynamisch festgelegt werden, was eine kontinuierliche Verbesserung des Formierungsprozesses ermöglicht. Zusätzlich könnten unterschiedliche Toleranzbereiche für verschiedene Batteriechemien und/oder beabsichtigte Anwendungen festgelegt werden, was Flexibilität im Herstellungsprozess bietet. Weiterhin können die Toleranzbereiche beziehungsweise der Toleranzbereich eine Funktion der Ladungsbilanz und des Widerstands sein. Mit anderen Worten können die Toleranzbereiche für Ladungsbilanz und Widerstand abhängig voneinander sein.

Gemäß einer bevorzugten Ausgestaltung der Erfindung erfolgt das Erfassen der Ladungsbilanz mittels einer Coulomb-Zählung.

Die Coulomb-Zählung ist ein bekanntes Verfahren zur Messung der in eine Batterie hinein- und herausgeflossenen elektrischen Ladung. Im Kontext der SEI-Ausbildung liefert sie ein präzises Maß für die im Formierungsprozess verbrauchte Ladung. Diese Methode ist besonders vorteilhaft, da sie vergleichsweise einfach implementiert werden kann und kontinuierliche Echtzeitdaten während des gesamten Formierungsprozesses bereitstellt. Alternativ oder ergänzend könnten weitere Ladungsmessungstechniken, wie beispielsweise eine differentielle Spannungsanalyse und/oder eine inkrementelle Kapazitätsanalyse, verwendet werden.

Gemäß einer bevorzugten Ausgestaltung der Erfindung erfolgt das Ermitteln des Widerstands mittels Strompulsen.

Strompulsmessungen bieten eine schnelle und effiziente Methode zum Ermitteln des Innenwiderstands der Batteriezelle, einschließlich des Beitrags der SEI-Schicht. Dieses Verfahren kann vergleichsweise einfach in bekannte Formierungsprozesse integriert werden, ohne die Lade- und Entladezyklen wesentlich zu beeinflussen. Die Strompulsmethode könnte auf mehrere Arten implementiert werden, beispielsweise durch Verwendung einzelner Pulse in regelmäßigen Abständen oder durch Einsatz komplexerer Pulsmuster, um detailliertere Informationen über das Zellverhalten und die SEI-Schicht zu erhalten. Die Pulsamplitude und/oder Pulsdauer könnten für verschiedene Zellchemien und/oder Formierungsstadien optimiert werden, um die relevantesten Widerstandsdaten zu erfassen und zu ermitteln.

Gemäß einer bevorzugten Ausgestaltung der Erfindung erfolgt das Ermitteln des Widerstands mittels eines Impedanzspektrums der elektrochemischen Impedanzspektroskopie.

Die elektrochemische Impedanzspektroskopie (EIS) bietet eine umfassende Charakterisierung des elektrischen Verhaltens der Batteriezelle, einschließlich detaillierter Informationen über die SEI-Schicht. Sie ermöglicht die Trennung verschiedener resistiver und kapazitiver Komponenten innerhalb der Zelle und bietet so ein differenzierteres Verständnis des SEI-Ausbildungsprozesses. Während EIS-Messungen typischerweise eine anspruchsvollere Ausrüstung und längere Messzeiten im Abgleich zu einfachen Widerstandsmessungen erfordern, bieten sie den Vorteil, umfangreiche, frequenzabhängige Daten zu liefern, die zur Modellierung und zum Verständnis komplexer elektrochemischer Prozesse, insbesondere der SEI-Ausbildung, innerhalb der Zelle verwendet werden können. Verschiedene Frequenzbereiche könnten verwendet und analysiert werden, um sich auf spezifische technische Aspekte der SEI-Schicht und/oder andere Zellkomponenten zu konzentrieren.

Gemäß einer bevorzugten Ausgestaltung der Erfindung wird zum Ermitteln des Widerstands ein Ersatzschaltbildmodell verwendet, wobei das Ersatzschaltbild durch einen Fit des Impedanzspektrums ermittelt wird.

Die Verwendung eines Ersatzschaltbildmodells zur Interpretation des Impedanzspektrums ermöglicht eine detailliertere und physikalisch aussagekräftigere Analyse der SEI-Schichteigenschaften. Durch die Anpassung der erfassten Daten an ein Schaltungsmodell können einzelne Komponenten, wie beispielsweise der ohmsche SEI-Widerstand und/oder die SEI-Kapazität ermittelt und insbesondere im Zeitverlauf verfolgt werden. Das Ersatzschaltbildmodell kann auf die spezifische Batteriechemie und den verwendeten Formierungsprozess angepasst werden. Komplexere Modelle könnten zusätzliche elektrische Elemente umfassen, um weitere Zellkomponenten und/oder Prozesse zu erfassen, während einfachere Modelle für eine schnellere Echtzeit-Analyse während der Produktion verwendet werden könnten.

Gemäß einer bevorzugten Ausgestaltung der Erfindung wird die elektrochemische Impedanzspektroskopie für einen festgelegten Frequenzbereich durchgeführt.

Die Begrenzung der EIS-Messungen auf einen spezifischen Frequenzbereich reduziert die Messzeit und es können dennoch die relevantesten Messdaten bezüglich der SEI-Ausbildung erfasst werden. Dies ist besonders wichtig innerhalb einer Batterieproduktion, da schnelle Messungen für die Prozesssteuerung vorteilhaft sind. Der Frequenzbereich kann je nach Batteriechemie und den spezifischen Aspekten der SEI-Schicht, die untersucht werden, variieren. Zum Beispiel könnten höhere Frequenzen relevanter für die Untersuchung der Anfangsstadien der SEI-Ausbildung sein, während niedrigere Frequenzen mehr Informationen über die langfristige Stabilität der Schicht liefern könnten.

Gemäß einer bevorzugten Ausgestaltung der Erfindung umfasst der festgelegte Frequenzbereich lediglich Frequenzen zwischen 1 Hz und 1 kHz, insbesondere zwischen 10 Hz und 1 kHz.

Frequenzen in diesem Bereich ermöglichen eine schnellere EIS-Messung. Dieser Frequenzbereich ist besonders relevant für die Charakterisierung der SEI-Schicht, da er typischerweise das resistive und kapazitive Verhalten erfasst, das mit der Grenzfläche zwischen Elektrode und Elektrolyt verbunden ist. Während der genannte Frequenzbereich wertvolle Informationen über die SEI-Schicht liefert, ist zu beachten, dass niedrigere Frequenzen weiterhin Einblicke in andere Zellprozesse bieten können. Weiterhin könnte eine Kombination aus Hochfrequenzmessungen (10 Hz - 1 kHz) für die Echtzeitsteuerung und gelegentlichen Messungen des Gesamtspektrums für eine umfassendere Analyse vorteilhaft sein.

Gemäß einer bevorzugten Ausgestaltung der Erfindung wird eine zusätzliche mit der Feststoff-Elektrolyt-Grenzphase assoziierte Kapazität ermittelt und zur Steuerung der Formierung verwendet.

Die Einbeziehung von Kapazitätsmessungen liefert zusätzliche Informationen über die Struktur und Eigenschaften der SEI-Schicht. Die Kapazität steht in Beziehung zur Dicke und den dielektrischen Eigenschaften der SEI und bietet komplementäre Informationen zu den Widerstandsmessungen. Die Kapazität könnte aus denselben EIS-Messungen ermittelt werden, die für das Ermitteln des Widerstands verwendet werden, möglicherweise unter Verwendung komplexwertiger Ersatzschaltbildmodelle.

Gemäß einer bevorzugten Ausgestaltung der Erfindung umfasst die Steuerung der Formierung die Steuerung und/oder Regelung einer Anzahl von Formierungszyklen, einer Spannung, eines Stroms und/oder einer Temperatur.

Dadurch wird eine Feinabstimmung des SEI-Ausbildungsprozesses basierend auf der erfassten Ladungsbilanz und dem Widerstand ermöglicht. Durch die Anpassung mehrerer Parameter kann das System den Formierungsprozess für jede einzelne Zelle optimieren, was potenziell die Batterieleistung verbessert. Das Steuerungssystem kann fortgeschrittene Algorithmen, wie maschinelle Lerntechniken, verwenden, um die optimale Kombination von Parametern basierend auf den erfassten Daten und historischen Leistungsaufzeichnungen zu ermitteln. Dadurch können adaptive Formierungsprotokolle bereitgestellt werden, die sich im Laufe der Zeit weiterentwickeln, um Effizienz und Qualität stetig zu verbessern.

Gemäß einer bevorzugten Ausgestaltung der Erfindung umfasst die Steuerung der Formierung ein Beenden der Formierung, wenn die erfasste Ladungsbilanz und der ermittelte Widerstand die jeweilig festgelegten Toleranzbereiche verletzen.

Dadurch wird eine frühzeitige Beendigung des Formierungsprozesses für Zellen, die wahrscheinlich nicht den endgültigen Qualitätsstandards entsprechen ermöglicht. Durch die frühzeitige Identifizierung und Entfernung potenziell fehlerhafter Zellen im Produktionsprozess können Zeit, Energie und Ressourcen reduziert werden. Die Abbruchkriterien könnten auf komplexen Entscheidungsalgorithmen basieren, die nicht nur die Werte von Ladungsbilanz und Widerstand berücksichtigen, sondern ebenfalls deren Änderungsraten und Muster über mehrere Formierungszyklen hinweg. Dies könnte die Genauigkeit der Fehlererkennung verbessern und die Wahrscheinlichkeit verringern, die Formierung potenziell guter Zellen vorzeitig zu beenden.

Gemäß einer bevorzugten Ausgestaltung der Erfindung erfolgt das Ermitteln des Widerstands am selben Arbeitspunkt wie die Erfassung der Ladungsbilanz.

Die Messung des Widerstands und der Ladungsbilanz am selben Arbeitspunkt, insbesondere zur im Wesentlichen selben Zeit, stellt sicher, dass die beiden Parameter vergleichbar und repräsentativ für den gleichen Zustand der Batteriezelle sind. Diese Synchronisation der Messungen liefert eine genauere und aussagekräftigere Bewertung des SEI-Ausbildungsprozesses. Der Arbeitspunkt für Messungen könnte derart eingestellt werden, dass er mit ermittelten Stadien des Formierungsprozesses zusammenfällt, wie beispielsweise am Ende jedes Lade- oder Entladezyklus. Mit anderen Worten kann mit Arbeitspunkt der Schlusspunkt eines Zyklus gemeint sein, sodass der Widerstand nach Zyklusende gemessen wird. Alternativ oder ergänzend könnten Messungen an mehreren Zeitpunkten während jedes Zyklus durchgeführt werden, um ein dynamischeres Bild des SEI-Ausbildungsprozesses zu erhalten.

Gemäß einer bevorzugten Ausgestaltung der Erfindung wird das Verfahren für mehrere Batteriezellen durchgeführt, wobei der Toleranzbereich in Abhängigkeit von einer Qualitätsprüfung der jeweiligen Batteriezellen ermittelt wird.

Dadurch wird die Entwicklung datengesteuerter, adaptiver Toleranzbereiche, die sich basierend auf der tatsächlichen Leistung der produzierten Zellen weiterentwickeln ermöglicht. Durch die Korrelation von Formierungsdaten mit den Ergebnissen der Qualitätsprüfung beziehungsweise der Qualitätskontrolle können Formierungsprozesse und ihre Qualitätskontrollkriterien kontinuierlich verbessert werden. Die zum Ermitteln der Toleranzbereiche verwendeten Qualitätskontrolle könnte mehrere Metriken umfassen, wie beispielsweise eine Kapazität, einen Innenwiderstand, eine Selbstentladungsrate und/oder eine Zyklenlebensdauer der formierten Batteriezelle. Weitere statistische Techniken könnten verwendet werden, um die Beziehungen zwischen Formierungsdaten und endgültiger Zellleistung zu analysieren.

Gemäß einer bevorzugten Ausgestaltung der Erfindung umfasst die Messeinheit ein erstes Messmodul zur Erfassung der Ladungsbilanz und ein zweites Messmodul zur Erfassung eines Impedanzspektrums, wobei das erfasste Impedanzspektrum zum Ermitteln des Widerstands dient.

Das erste Messmodul kann für eine hochpräzise Stromintegration ausgebildet sein, während das zweite Messmodul für genaue Hochfrequenzmessungen ausgebildet sein kann.

Weiterhin könnte das zweite Modul verschiedene Impedanzspektroskopien für unterschiedliche Batteriechemien oder Produktionslinien ermöglichen. Weiterhin können zusätzliche Messmodule umfasst sein, insbesondere für weitere relevante Parameter, wie beispielsweise Temperatur, Luftfeuchtigkeit, und/oder Gasbildung.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: ein Flussdiagramm, das einen Batterieformierungsprozess einschließlich Produktion, Formierung und Qualitätskontrolle darstellt;
- Figur 2: ein Diagramm, das die Beziehung zwischen Ladungsbilanz und SEI-Widerstand mit Toleranzbereichen und Datenpunkten zeigt; und
- Figur 3: einen Nyquist-Plot eines Impedanzspektrums mit einem Ersatzschaltbildmodell für eine Batteriezelle.

Gleichartige, gleichwertige oder gleichwirkende Elemente können in einer der Figuren oder in den Figuren mit denselben Bezugszeichen versehen sein.

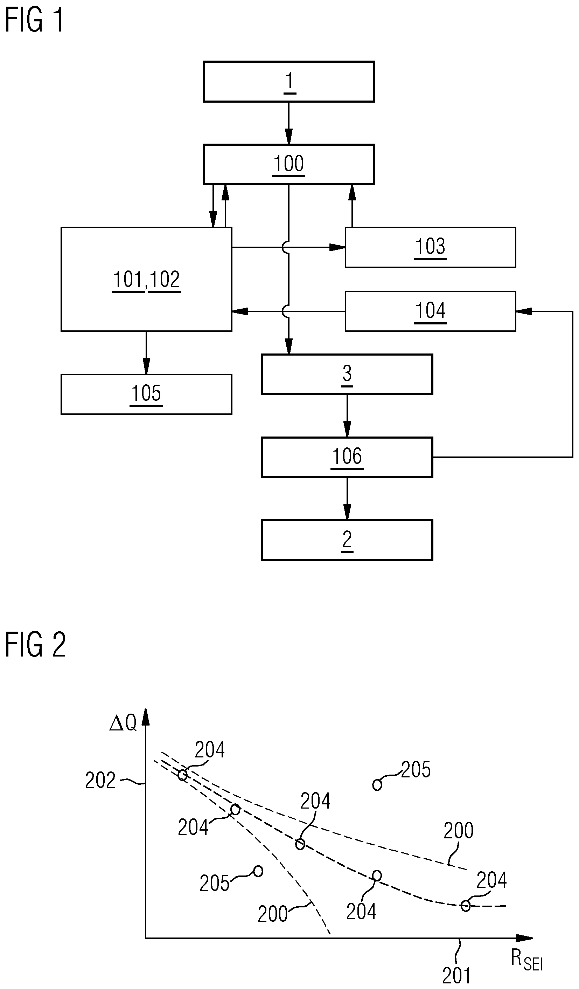

Die Figur 1 zeigt ein Flussdiagramm, das den Batterieformierungsprozess einschließlich Produktion, Formierung und Qualitätskontrolle darstellt.

Der dargestellte Prozess beginnt mit dem Befüllen der Batterie 1. Der Schritt 1 kann das Zusammensetzen der Zellkomponenten und das Befüllen der Batterie mit Elektrolyt umfassen.

In einem weiteren Schritt erfolgt die Formierung 100, die zur Ausbildung einer Feststoff-Elektrolyt-Grenzphase dient. Der Formierungsprozesses gliedert sich in mehrere dargestellte Teilschritte 101, 102, 103 und 104.

Der Schritt 101 umfasst eine Erfassung der mit der SEI-Ausbildung assoziierten Ladungsbilanz. Dies kann durch eine Coulomb-Zählung erfolgen, bei der der Strom über die Zeit integriert wird, um die insgesamt übertragene Ladung zu ermitteln. Dieser Schritt liefert entscheidende Daten zur Überwachung des Fortschritts der SEI-Ausbildung.

Der Schritt 102 bezieht sich auf die Messung des mit der SEI-Schicht verbundenen Widerstands. Dies kann durch verschiedene Messverfahren ermöglicht werden, wie beispielsweise einer Strompulsmessung und/oder eine elektrochemische Impedanzspektroskopie (EIS). Die Widerstandsmessung beziehungsweise die Widerstandsermittlung liefert Einblick in die Qualität und Dicke der sich bildenden SEI-Schicht.

Der Schritt 103 umfasst eine Steuerung des Formierungsprozesses basierend auf der erfassten Ladungsbilanz und dem ermittelten Widerstand. Hierbei können Parametern, wie beispielsweise ein Strom, eine Spannung und/oder Temperatur gesteuert werden, um die SEI-Ausbildung für jede einzelne Zelle zu optimieren.

Im Schritt 104 erfolgt eine Festlegung und/oder Bereitstellung von Toleranzbereichen beziehungsweise ein Toleranzbereich für die Ladungsbilanz und den Widerstand. Parallel zu diesen Schritten erfolgt die Definition des Toleranzbereichs 104. Dadurch werden akzeptable Grenzen für die erfassten Parameter festgelegt und eine Qualitätskontrolle bereits während des Formierungsprozesses ermöglicht. Die Toleranzbereiche können basierend auf historischen Daten und/oder Batterieleistungsmetriken dynamisch festgelegt werden.

Weiterhin umfasst das Flussdiagramm einen Schritt 2 zum Verschließen der Batterie beziehungsweise der Batteriezelle. Dieser Schritt umfasst ein Versiegeln der Batteriezelle, um Elektrolytleckage und Kontamination zu verhindern.

Nach dem Verschließen 2 durchläuft die Batterie die Qualitätskontrolle 106. Dadurch wird sichergestellt, dass die formierte und versiegelte Batterie die erforderlichen Spezifikationen und Leistungsstandards erfüllt. In dieser Phase können verschiedene Tests durchgeführt werden, einschließlich Kapazitätsmessungen, Innenwiderstandsprüfungen und/oder Beurteilungen bezüglich der Zyklenlebensdauer.

Wenn eine Batterie die Qualitätsstandards nicht erfüllt, geht sie in den Schritt 105 über, der die Aussonderung der Batterie 105 bezeichnet. Diese frühzeitige Identifizierung von minderwertigen Zellen kann die Produktionseffizienz erheblich verbessern, indem eine weitere Verarbeitung defekter Einheiten verhindert wird. Batterien, die die Qualitätskontrolle bestehen, werden zu fertig hergestellten Batterien 2, die für den Einsatz oder die weitere Montage in größere Batteriepacks vorgesehen sind.

Das Flussdiagramm zeigt ein umfassendes Verfahren zur Batterieformierung beziehungsweise dessen Steuerung/Regelung, welches eine Echtzeitüberwachung, eine adaptive Steuerung und verbesserte Qualitätssicherungsmaßnahmen umfasst. Dadurch wird die kritische SEI-Ausbildungsphase optimiert, die für die langfristige Leistung und Lebensdauer der Batterie entscheidend ist.

Die Figur 2 zeigt ein Diagramm, das die Abhängigkeit zwischen Ladungsbilanz 202 und Widerstand 201 während des Batterieformierungsprozesses verdeutlicht. Die Abszisse repräsentiert den mit der Feststoff-Elektrolyt-Grenzphase (SEI) verbundenen Widerstand 201, während die Ordinate die Ladungsbilanz 202 darstellt.

Das Diagramm zeigt einen Toleranzbereich 200, der durch zwei gestrichelte Linien dargestellt wird, die einen akzeptablen Bereich für Datenpunkte festlegen. Der Toleranzbereich ist entscheidend für die Qualitätskontrolle während des Formierungsprozesses. Er repräsentiert die ermittelte optimale Beziehung zwischen Ladungsbilanz und SEI-Widerstand für die Produktion hochwertiger Batterien und kann empirisch ermittelt und festgelegt werden. Die Toleranzbereiche von Ladungsbilanz und Widerstand sind somit gemäß der dargestellten Funktionen 200 voneinander abhängig.

Weiterhin zeigt das Diagramm mehrere Datenpunkte 204, 205, das heißt Tupel aus Ladungsbilanz und zugehörigem Widerstand. Die Datenpunkte 204 sind innerhalb des Toleranzbereichs 200 angeordnet und erstrecken sich entlang einer Kurve innerhalb des Toleranzbereichs 200. Die Datenpunkte stellen Messungen von Batteriezellen während der Formierung dar, die sich wie erwartet entwickeln. Die Gruppierung dieser Punkte entlang einer Kurve deutet auf einen typischen Verlauf der SEI-Ausbildung hin, bei dem der Widerstand zunimmt, während mehr Ladung für die Ausbildung der Schicht verbraucht wird.

Weiterhin zeigt das Diagramm repräsentativ die zwei Datenpunkte 205, die außerhalb des Toleranzbereichs 200 angeordnet sind. Die Datenpunkte 205 korrespondieren zu Messungen von Zellen, deren SEI-Schicht sich nicht ordnungsgemäß ausbildet. Das kann beispielsweise aufgrund von Herstellungsfehlern und/oder unerwarteten chemischen Reaktionen während der Formierung der Fall sein. Solche Zellen gemäß dem in Figur 1 dargestellten Verfahren ausgesondert werden.

Die Verwendung dieses Diagramms und/oder des dargestellten Zusammenhangs von Ladungsbilanz und Widerstand im Formierungsprozess ermöglicht eine Echtzeitüberwachung und -steuerung. Durch das Auftragen der erfassten Ladungsbilanz- und Widerstandswerte für jede Zelle während der Formierung abnormale Zellen schnelle identifiziert beziehungsweise erkannt werden. Dies ermöglicht ein schnelles Eingreifen, wie beispielsweise eine Anpassung von Formierungsparametern und/oder die Beendigung des Formierungsprozesses für stark außerhalb des Toleranzbereiches liegende Zellen.

Weiterhin können die aus diesem Prozess gesammelten Daten gespeichert und verwendet werden, um das Formierungsprotokoll im Laufe der Zeit zu verfeinern und zu optimieren. Durch die Analyse der Eigenschaften von Zellen, die in der endgültigen Qualitätsprüfung genügen, können Toleranzbereiche und Formierungsparameter erkannt und verwendet werden, die zu verbesserten Batterien führen.

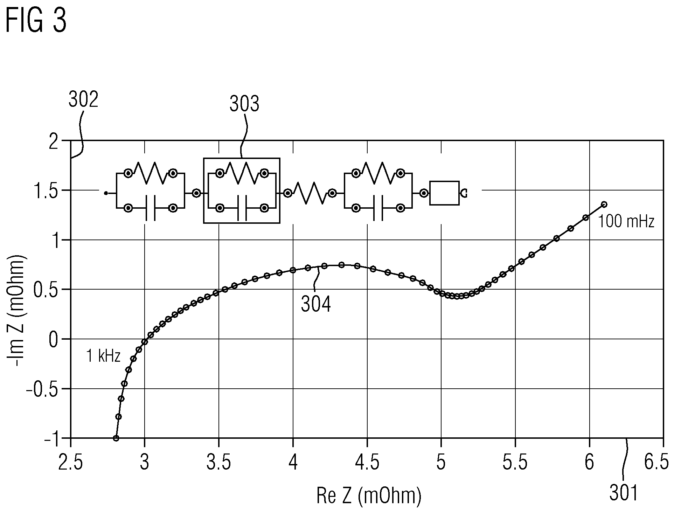

Die Figur 3 zeigt einen Nyquist-Plot eines Impedanzspektrums 304 mit einem Ersatzschaltbildmodell 303 für eine Batteriezelle. Diese Art von Diagramm wird typischerweise verwendet, um Daten aus elektrochemischen Impedanzspektroskopie (EIS)-Messungen zu visualisieren und zu analysieren.

Die Abszisse 301 repräsentiert den Realteil der Impedanz (Re Z), der mit resistiven Elementen in der Zelle verbunden ist. Die Ordinate 302 repräsentiert den negativen Imaginärteil der Impedanz (-Im Z), der mit kapazitiven und induktiven Elementen assoziiert ist.

Das Impedanzspektrum 304 ist als Linie mit kreisförmigen Datenpunkten dargestellt. Diese Kurve ist charakteristisch für Batteriezellen und liefert wertvolle Informationen über verschiedene elektrochemische Prozesse, die innerhalb der Zelle ablaufen.

Weiterhin umfasst das in Figur 2 dargestellte Diagramm eine Darstellung eines Ersatzschaltbildmodell 303. Ein für den Widerstand relevantes Element ist mit einem gestrichelten Rechteck gekennzeichnet. Das dargestellte Modell repräsentiert einen elektrischen Schaltkreis, der das Verhalten der Batteriezelle nachbildet. Die Komponenten in diesem Modell umfassen typischerweise Widerstände R, die verschiedene resistive Elemente in der Zelle repräsentieren, wie beispielsweise den Elektrolytwiderstand und den Ladungstransferwiderstand, Kondensatoren C, die die Doppelschichtkapazität an den Elektroden-Elektrolyt-Grenzflächen und das kapazitive Verhalten der SEI-Schicht repräsentieren sowie möglicherweise komplexere Elemente, wie beispielsweise Constant Phase Elements (CPE) und/oder Warburg-Impedanzen, die nicht-ideales kapazitives Verhalten beziehungsweise Diffusionsprozesse modellieren können. Das Ersatzschaltbildmodell dient der Interpretation der EIS-Daten und der Ermittlung des Widerstands R.

Die Verwendung einer oder mehrerer EIS-Messungen und der zugehörigen Ersatzschaltbildmodellierung in der Batterieformierung bietet mehrere Vorteile:
Zerstörungsfreie Prüfung: Eine EIS-Messung ermöglicht die Charakterisierung der Zelle, ohne den Formierungsprozess zu stören.

Frequenzabhängige Informationen: Durch Messung der Impedanz über einen Frequenzbereich kann zwischen verschiedenen Prozessen innerhalb der Zelle unterschieden werden.

Quantitative Analyse: Die Anpassung der Daten an ein Ersatzschaltbildmodell liefert numerische Werte für entscheidende Parameter, insbesondere den Widerstand, und ermöglicht eine präzise Verfolgung der SEI-Entwicklung.

Qualitätskontrolle: Abweichungen von erwarteten Impedanzspektren können auf Probleme im Formierungsprozess und/oder Defekte innerhalb der Zelle hinweisen.

Prozessoptimierung: Durch die Korrelation von EIS-Daten mit der endgültigen Batterieleistung können verbesserte Formierungsprotokolle bereitgestellt werden, um qualitativ hochwertigere Zellen herzustellen.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Befüllen der Batterie
- 2: Verschließen der Batterie
- 3: hergestellte Batterie
- 100: Formierung
- 101: Erfassung der Ladungsbilanz
- 102: Ermitteln des Widerstands
- 103: Steuerung der Formierung
- 104: Festlegung des Toleranzbereichs
- 105: Aussonderung der Batterie
- 106: Qualitätskontrolle
- 200: Toleranzbereich
- 201: Widerstand
- 202: Ladungsbilanz
- 204: Datenpunkte innerhalb des Toleranzbereichs
- 205: Datenpunkte außerhalb des Toleranzbereichs
- 301: Realteil der Impedanz
- 302: negativer Imaginärteil der Impedanz
- 303: Ersatzschaltbildmodell
- 304: Impedanzspektrum

## Patentansprüche

1. Verfahren zur Steuerung einer Formierung (100) wenigstens einer Batteriezelle zur Ausbildung einer Feststoff-Elektrolyt-Grenzphase, **gekennzeichnet durch** folgende Schritte:
- (101) Erfassen einer mit der Feststoff-Elektrolyt-Grenzphase assoziierten Ladungsbilanz während wenigstens eines Formierungszyklus der Formierung;
- (102) Ermitteln eines mit der Feststoff-Elektrolyt-Grenzphase assoziierten Widerstands während des Formierungszyklus; und
- (103) Steuern der Formierung (100) in Abhängigkeit von der erfassten Ladungsbilanz und dem ermittelten Widerstand.

2. Verfahren gemäß Anspruch 1, **dadurch gekennzeichnet, dass** die Steuerung (103) basierend auf einem Abgleich der erfassten Ladungsbilanz und des ermittelten Widerstands mit jeweiligen festgelegten Toleranzbereichen (104) erfolgt.

3. Verfahren gemäß Anspruch 1 oder 2, **dadurch gekennzeichnet, dass** die Erfassung der Ladungsbilanz (101) mittels einer Coulomb-Zählung erfolgt.

4. Verfahren gemäß einem der vorhergehenden Ansprüche, **dadurch gekennzeichnet, dass** das Ermitteln (102) des Widerstands mittels Strompulsen erfolgt.

5. Verfahren gemäß einem der vorhergehenden Ansprüche, **dadurch gekennzeichnet, dass** das Ermitteln (102) des Widerstands mittels eines Impedanzspektrums einer elektrochemischen Impedanzspektroskopie erfolgt.

6. Verfahren gemäß Anspruch 5, **dadurch gekennzeichnet, dass** zur Ermittlung des Widerstands (102) ein Ersatzschaltbildmodell (303) verwendet wird, wobei das Ersatzschaltbild durch einen Fit des Impedanzspektrums ermittelt wird.

7. Verfahren gemäß Anspruch 5 oder 6, **dadurch gekennzeichnet, dass** die elektrochemische Impedanzspektroskopie für einen festgelegten Frequenzbereich durchgeführt wird.

8. Verfahren gemäß einem der Ansprüche 5 bis 7, **dadurch gekennzeichnet, dass** der festgelegte Frequenzbereich nur Frequenzen zwischen 1 Hz und 1 kHz umfasst.

9. Verfahren gemäß einem der Ansprüche 5 bis 8, **dadurch gekennzeichnet, dass** eine zusätzliche mit der Feststoff-Elektrolyt-Grenzphase assoziierte Kapazität ermittelt und zur Steuerung der Formierung (103) verwendet wird.

10. Verfahren gemäß einem der vorhergehenden Ansprüche, **dadurch gekennzeichnet, dass** die Steuerung der Formierung eine Steuerung und/oder Regelung einer Anzahl von Formierungszyklen, einer Spannung, eines Stroms und/oder einer Temperatur umfasst.

11. Verfahren gemäß der Ansprüche 2 bis 10, **dadurch gekennzeichnet, dass** die Steuerung der Formierung (103) ein Beenden der Formierung (100) umfasst, wenn die erfasste Ladungsbilanz und der ermittelte Widerstand die jeweiligen festgelegten Toleranzbereiche verletzen.

12. Verfahren gemäß einem der vorhergehenden Ansprüche, **dadurch gekennzeichnet, dass** das Ermitteln des Widerstands (102) am selben Arbeitspunkt wie die Erfassung der Ladungsbilanz (101) erfolgt.

13. Verfahren gemäß einem der Ansprüche 2 bis 12, **dadurch gekennzeichnet, dass** das Verfahren für mehrere Batteriezellen durchgeführt wird, wobei der Toleranzbereich (104) in Abhängigkeit von einer Qualitätsprüfung der jeweiligen Batteriezellen ermittelt wird.

14. Vorrichtung zur Steuerung einer Formierung (100) wenigstens einer Batteriezelle zur Ausbildung einer Feststoff-Elektrolyt-Grenzphase, umfassend eine Messeinheit und eine Steuereinheit, **dadurch gekennzeichnet, dass**
- (101) die Messeinheit dazu ausgebildet ist, eine mit der Feststoff-Elektrolyt-Grenzphase assoziierte Ladungsbilanz während wenigstens eines Formierungszyklus der Formierung zu erfassen;
- (102) die Messeinheit dazu ausgebildet ist, einen mit der Feststoff-Elektrolyt-Grenzphase assoziierten Widerstand während des Formierungszyklus zu ermitteln; und
- (103) die Steuereinheit dazu ausgebildet ist, die Formierung in Abhängigkeit von der erfassten Ladungsbilanz und dem ermittelten Widerstand zu steuern.

15. Vorrichtung gemäß Anspruch 14, **dadurch gekennzeichnet, dass** die Messeinheit ein erstes Messmodul zur Erfassung der Ladungsbilanz (101) und ein zweites Messmodul zur Erfassung eines Impedanzspektrums (102) umfasst, wobei das erfasste Impedanzspektrum zur Ermittlung des Widerstands dient.
